# FASCICULE DE BREVET EUROPEEN

(11) **EP 4 277 727 B1**
(45) Date de publication et mention de la délivrance du brevet: **04.06.2025**
(21) Numéro de dépôt: 22700318.3
(22) Date de dépôt: 07.01.2022
(51) Int. Cl.: B01D 53/26, B01D 53/00, F25J 3/02, F25J 3/06, C01B 32/50

(54) **PROCÉDÉ ET APPAREIL DE SÉCHAGE D'UN DÉBIT RICHE EN DIOXYDE DE CARBONE**
VERFAHREN UND VORRICHTUNG ZUM TROCKNEN EINES KOHLENDIOXIDREICHEN STROMS
METHOD AND APPARATUS FOR DRYING A FLOW RICH IN CARBON DIOXIDE

(30) Priorité: 14.01.2021 FR 2100351
(43) Date de publication de la demande: 22.11.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LECLERC, Mathieu, 94503 CHAMPIGNY SUR MARNE (FR); PERE, Félix, 94503 CHAMPIGNY SUR MARNE (FR)
(74) Mandataire: Air Liquide
(86) Numéro de dépôt international: PCT/EP2022/050276
(87) Numéro de publication internationale: WO 2022/152629

(56) Documents cités:
- FR-A1- 2 872 890
- FR-A1- 3 012 973
- US-A1- 2007 232 706
- US-A1- 2010 024 476
- US-A1- 2013 298 599
- US-A1- 2015 174 523

## Description

La présente invention est relative à un procédé de séchage d'un débit riche en dioxyde de carbone. Un débit riche en dioxyde de carbone contient au moins 90% mol., de préférence au moins 95% mol, voire au moins 98% mol. CO₂ en base sèche. Elle est également relative à un appareil de séparation par absorption physique, chimique ou physico-chimique intégré à un appareil de séchage.

Les unités de séparation de CO₂ peuvent être disséminées au sein d'un bassin industriel sur plusieurs émetteurs. La plupart des procédés de séparation par exemple ceux fonctionnant par absorption physique, chimique ou physico-chimique produisent le CO₂ à basse pression et saturé en eau, comme par exemple les procédés de lavage aux amines. Il est donc nécessaire de comprimer et sécher le CO₂ produit avant exportation et/ou liquéfaction pour séquestration ou usage.

Des synergies peuvent être trouvées en mettant en commun les unités de compression et de séchage entre les différents émetteurs afin de réaliser des économies d'échelle et surtout d'infrastructures. En particulier, la mise en commun avec du CO₂ provenant d'une unité de séparation de CO₂ par voie cryogénique peut apporter des gains supplémentaires.

Il est connu de FR2954179 de sécher un débit riche en dioxyde de carbone produit par un lavage aux amines en utilisant une étape d'adsorption. FR3012973 A1 enseigne également le séchage d'un courant gazeux humide de CO2 comprenant une étape d'adsorption. Une partie du gaz séché est sacrifié comme gaz de régénération de l'adsorbeur.

La compression de CO₂ et son séchage peuvent être configurés de la manière suivante :
- Compression du CO₂ humide jusqu'à une pression intermédiaire ou jusqu'à la pression finale,
- Refroidissement du gaz comprimé (par un fluide à température ambiante, telle que de l'air, de l'eau de réfrigération voire par de l'eau réfrigérée) permettant d'évacuer une part de l'eau sous forme de condensats,
- Séchage par adsorption :
   ∘ une bouteille est en production,
   ∘ l'autre bouteille identique est en parallèle et en régénération. La régénération est réalisée par le passage d'un courant chaud, préférablement à plus basse pression afin de réduire les dimensions du sécheur. Le gaz de régénération peut être une part du gaz séché (5 à 30%). Le gaz ayant servi à la régénération est détendu et recyclé dans le compresseur dans une section à plus basse pression. L'eau issue de la régénération est ainsi partiellement éliminée conjointement avec les condensats.
- Compression du CO₂ sec jusqu'à la pression finale dans le cas d'un séchage à une pression intermédiaire.

Une part de l'énergie consommée est donc liée à la recompression du gaz de régénération ainsi que sa réfrigération dans le cas d'un refroidissement par eau réfrigérée.

Dans le cas d'une intégration de CO₂ provenant d'une unité de séparation par voie cryogénique, du CO₂ provenant de la séparation cryogénique est disponible sec et sous pression, a minima à une pression proche de celle du point triple du CO₂, la séparation cryogénique étant généralement au moins partiellement opérée à cette pression. Dans le cas d'une compression commune, ce CO₂ est intégré à niveau intermédiaire du compresseur. Si l'unité de séparation par voie cryogénique fournit d'autres courants de CO₂ à plus haute pression, ils peuvent aussi être intégrés à un niveau proche dans le compresseur.

Le sécheur est le plus souvent opéré à une pression plus haute que l'injection à la pression proche du point triple du CO₂ pour des raisons technico-économiques (quantité d'eau résiduelle à adsorber, taille des adsorbeurs et sélection des matériaux des compresseurs étant à prendre en compte notamment).

Selon un objet de l'invention, il est prévu un procédé de séchage selon la revendication 1.

Selon d'autres objets facultatifs :
- le gaz épuré dans l'unité d'adsorption est comprimé dans un compresseur avec un gaz contenant au moins 90% de préférence au moins 95% mol, voire au moins 98% mol. de dioxyde de carbone provenant de l'appareil de séparation.
- le gaz épuré dans l'unité d'adsorption est comprimé dans un compresseur avec un gaz provenant de l'appareil de séparation plus riche en dioxyde de carbone que le gaz contenant du dioxyde de carbone et au moins une impureté.
- au moins une partie du gaz de régénération est constituée par une partie du premier courant épuré dans l'unité d'adsorption.
- le premier courant provient d'un procédé traitant un débit contenant du dioxyde de carbone pour l'enrichir en dioxyde de carbone, par exemple un procédé d'absorption physique, chimique ou physico-chimique ou un procédé d'adsorption.
- l'unité d'adsorption est une unité d'adsorption par modulation de température et la pression de l'adsorption est supérieure à celle de la régénération.
- la pression de l'adsorption et la pression de la régénération sont supérieures à 4,5 bars abs, de préférence à 5,5 bars abs voire à 6,5 bars abs.
- la pression d'adsorption est au moins égale à 10 bars abs.
- l'unité d'adsorption comprend deux ou trois adsorbeurs.

Selon un autre objet de l'invention, il est prévu un appareil selon la revendication 10.

Selon d'autres aspects facultatifs :
- l'appareil comprend des moyens pour sécher le gaz contenant du dioxyde de carbone et au moins une impureté en amont de l'appareil de séparation.

L'invention permet de réduire l'énergie de compression et/ou de réfrigération pour produire du dioxyde de carbone sec à partir d'un procédé produisant du dioxyde de carbone humide. La taille du sécheur de CO₂ de l'unité de réfrigération et de la section de compression traitant le CO₂ peut également être réduite. Dans les cas où le procédé utilise comprime ensemble des débits issus de l'absorption et du la séparation à basse température, le nombre de machines tournantes peut être réduit. Parmi les caractéristiques innovantes de variantes de l'invention, on peut noter :
- Opérer le sécheur à une pression supérieure à celle du point triple du CO₂, à la sortie d'une seconde section du compresseur.
- Utiliser le CO₂ sec provenant de l'unité de séparation par voie cryogénique à une pression proche du point triple du CO₂ comme gaz de régénération.
- Recycler ce gaz de régénération à la sortie d'une première section du compresseur.

De cette manière, on profite de la disponibilité d'un gaz sec à plus basse pression que le sécheur pour le régénérer. Il n'est pas nécessaire de détendre et recycler une part du CO₂ sec en sortie du sécheur permettant ainsi un gain énergétique et une diminution de la taille des équipements dans la boucle de régénération.

Lorsque l'unité de séparation de CO₂ est à l'arrêt ou à basse charge, le débit de CO₂ à la pression proche du point triple du CO₂ peut s'avérer insuffisant pour la régénération du sécheur. Dans ce cas, le complément peut être fourni par une part du CO₂ sec sortant du sécheur, détendu.

Une variante du procédé selon l'invention peut être l'utilisation commune du refroidisseur intermédiaire du compresseur afin de refroidir le gaz issu de la section précédente de compresseur et le gaz chaud issu de la régénération du sécheur.

Dans le cas d'un séparateur de condensat distinct du refroidisseur intermédiaire du compresseur, ce dernier peut aussi être mis en commun afin de séparer les condensats du CO₂ gazeux issu de la section précédente de compresseur et le gaz chaud issu de la régénération du sécheur.

L'invention sera décrite de manière plus détaillée en se référant à la figure.

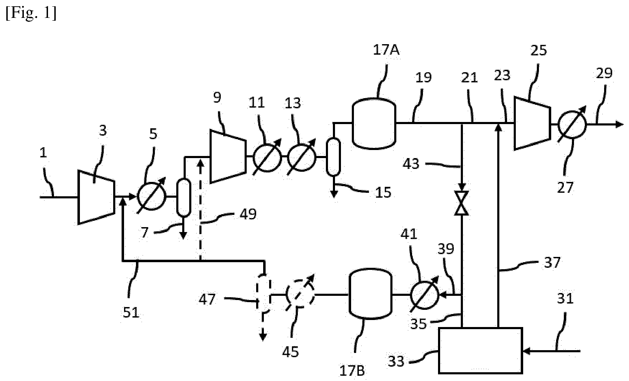

[FIG.1] illustre un procédé selon l'invention.

Un débit 1 de gaz enrichi en dioxyde de carbone provient d'un procédé de séparation de dioxyde de carbone, tel qu'un procédé d'adsorption ou d'absorption physique, chimique ou physico-chimique traitant un débit contenant du dioxyde de carbone. Plusieurs unités de séparation produisant des débits de dioxyde de carbone humides peuvent alimenter un seul appareil de séchage, selon l'invention. Le débit 1 contient au moins 90% de dioxyde de carbone en base sèche de préférence au moins 95% mol, voire au moins 98% mol. CO₂ en base sèche ainsi que de l'eau. Il se trouve typiquement à une pression entre 1 et 2 bars absolus et peut également contenir des impuretés telles que de l'azote, de l'hydrogène, du méthane, de l'oxygène et du méthanol. Le débit 1 est comprimé dans une étage de compression 3 et ensuite refroidi dans un refroidisseur 5, ce qui a pour effet de condenser une partie 7 de l'eau qu'il contient. Le gaz restant est comprimé dans un étage de compression 9, ensuite refroidi dans un voire deux refroidisseurs 11, 13, ce qui a pour effet de condenser une partie 15 de l'eau qu'il contient. Le gaz séché est envoyé à un des au moins deux adsorbeurs d'une unité d'adsorption de type PTSA (« pressure and temperature swing adsorption » ou adsorption à modulation de température et de pression) comprenant au moins deux adsorbeurs contenant de l'alumine. Trois adsorbeurs peuvent s'avérer nécessaires pour des installations plus grandes. Pendant que l'un des adsorbeurs adsorbe l'eau dans le gaz séché, l'autre adsorbeur (ou un des autres adsorbeurs) est régénéré par un gaz de régénération. Un débit sec 19 riche en CO₂ sort de l'adsorbeur 17A et est comprimé dans un compresseur 25 avant d'être refroidi dans un refroidisseur 27 pour produire un débit de gaz sec 29. Si le débit sec 19 sort de l'adsorbeur 17A à la pression requise, aucune compression ne sera nécessaire. De même si le gaz 1 est disponible à la pression requise pour l'adsorption, aucune compression n'est nécessaire en amont des adsorbeurs 17A, 17B.

L'adsorption est effectuée à une pression supérieure à celle du point triple du CO₂, ici à la sortie d'une seconde section du compresseur 9. Cette pression minimale peut par exemple être entre 5 et 6,5 bars abs pour tenir compte des pertes de charge, voire entre 5 et 6 bars abs. L'adsorption se réalise de préférence à au moins 10 bars abs, par exemple entre 18 et 20 bar abs.

Un débit 31 de gaz contenant du dioxyde de carbone et au moins une impureté (telle que l'oxygène, l'azote, l'argon, l'hydrogène, le monoxyde de carbone) est envoyé à un appareil de séparation 33 où le gaz est refroidi et séparé par condensation partielle et/ou distillation pour produire au moins un gaz enrichi en dioxyde de carbone 35 par rapport au débit 31 et ne contenant pas d'eau. Si le débit 31 contient de l'eau, elle doit être enlevée en amont du refroidissement jusqu'à une température en dessous de 0°C qui précède nécessairement la condensation partielle et/ou la distillation. Le gaz enrichi en dioxyde de carbone 35 est donc nécessairement sec et parfaitement adapté à la régénération de l'adsorbeur 17B saturé en eau, ayant servi précédemment à épurer le gaz 1.

Ce débit 31 n'est pas le gaz sec 29 et n'a pas été dérivé du gaz sec 29. De préférence il contient moins que au moins 90% mol., de préférence au moins 95% mol, voire au moins 98% mol. CO₂ en base sèche.

Le gaz sec 29 est envoyé à un élément autre que l'appareil de séparation 33.

Le gaz 35 est réchauffé par échange de chaleur contre le débit 31 dans un échangeur de chaleur (non-illustré) faisant partie de l'appareil de séparation pour l'amener à une température entre 0 et 20°C. Il se trouve à une pression d'au moins 5 bars abs, de préférence d'au moins 6 bars abs, voire au moins 6, 5 bars abs. Ce gaz sec 35 provenant de l'appareil de séparation est à une pression proche du point triple du CO₂ par exemple entre 5 et 6,5 bars abs, voire entre 5 et 6 bars abs.

Le gaz 35 est réchauffé par un réchauffeur 41 et ensuite régénère l'adsorbeur 17B.

Le débit de gaz de régénération 51 contenant de l'eau est refroidi dans le refroidisseur 45 pour condenser au moins une partie de l'eau qui est ensuite séparée dans le séparateur 47. Le gaz formé 49 est recyclé juste en amont de l'étage de compression 9 et/ou comme débit 51 en aval de l'étage de compression 3 et en amont du refroidisseur 5.

Ce recyclage permet de réduire les pertes de dioxyde de carbone.

Si l'appareil de séparation 33 produit moins de gaz 35 ou pas de gaz 35, le gaz 43 peut être utilisé pour régénérer l'adsorbeur 17B, donc en prenant une partie du gaz 19.

Un gaz 37 riche en dioxyde de carbone provenant de l'appareil de séparation 33 peut être comprimé dans le compresseur 25 pour former partie du produit 29. Il peut être mélangé avec le gaz 19 en amont du compresseur 25 ou sinon introduit à un niveau intermédiaire du compresseur selon la pression à laquelle il se trouve. Il contient de préférence au moins 90% de préférence au moins 95% mol, voire au moins 98% mol. de dioxyde de carbone.

Une partie du gaz 37 peut également servir pour régénérer l'adsorbeur 17B. Ceci présente un intérêt particulier si le gaz à sécher est à une pression plus élevée. Dans ce cas, l'adsorbeur 17A est opéré à une pression supérieure à celle du fluide 37 qui doit être intégré dans un autre étage plus bas que le sécheur.

Dans cette figure, le gaz 35 et le gaz 37 peuvent être produits à des pressions différentes, l'une correspondant à la pression de régénération et l'autre à une pression d'entrée ou d'inter étage du compresseur 25. Ils peuvent également avoir des compositions différentes.

Le gaz 35 et/ou le gaz 37 contient (ou contiennent) de préférence au moins 90% mol. de préférence au moins 95% mol, voire au moins 98% mol. CO₂. Ils sont enrichis en dioxyde de carbone par rapport au débit 31.

Il est également possible d'utiliser un seul gaz produit par l'appareil 33 pour servir en partie comme gaz de régénération et en partie comme produit, éventuellement à comprimer dans le compresseur 25.

L'usage d'un compresseur commun 25 pour comprimer le gaz riche en dioxyde de carbone provenant à la fois d'un appareil de séparation à basse température et d'au moins un appareil produisant du dioxyde de carbone humide permet de réduire le nombre total de machines tournantes sur le site.

## Revendications

1. Procédé de séchage d'un premier courant gazeux humide contenant au moins 90% mol., de préférence au moins 95% mol, voire au moins 98% mol. CO₂ en base sèche comprenant les étapes suivantes :
i) compression du premier courant gazeux humide (1) par au moins une étape de compression (3, 9) jusqu'à une première pression afin d'obtenir un premier courant gazeux humide à la première pression, puis refroidissement dans au moins un refroidisseur (5, 11, 13) en aval de l'étape de compression, une partie de l'eau (7, 15) produite par la compression et le refroidissement étant enlevée en amont d'une unité d'adsorption
ii) séchage du premier courant dans l'unité d'adsorption d'eau du type mettant en œuvre n adsorbeurs (17A, 17B) avec, pour chaque adsorbeur, un cycle comprenant les phases opératoires suivantes, lesquelles sont décalées d'un adsorbeur à l'autre d'un nième de la durée (T) du cycle :
a. adsorption, cette phase d'adsorption comportant l'admission du premier courant gazeux humide dans l'adsorbeur par une première extrémité, dite extrémité d'entrée, de l'adsorbeur, avec circulation de ce courant dans l'adsorbeur et soutirage simultané par l'autre extrémité de l'adsorbeur de gaz épuré en eau, et
b. régénération de l'adsorbeur pendant lequel un gaz de régénération (35) régénère l'adsorbeur,
le premier courant étant épuré en eau dans un des adsorbeurs pour produire un gaz séché (19, 29) alors que le gaz de régénération est envoyé à un autre des adsorbeurs,
iii) exportation et/ou liquéfaction ailleurs que dans un appareil de séparation (33) du gaz séché
iv) séparation d'un gaz (31) contenant moins que 90% mol. CO2 en base sèche et au moins une impureté, autre que le gaz séché, par condensation partielle et/ou distillation à une température inférieure à 0°C dans l'appareil de séparation (33) produisant un gaz (35, 37) contenant au moins 90% mol de dioxyde de carbone qui constitue au moins une partie du gaz de régénération et
v) envoi du gaz de régénération (49, 51) ayant régénéré l'adsorbeur se mélanger avec le courant humide en amont d'au moins une des étapes de compression et d'au moins un des refroidisseurs.

2. Procédé selon la revendication 1 dans lequel le gaz épuré dans l'unité d'adsorption (21) est comprimé dans un compresseur (25) avec un gaz (37) contenant au moins 90% de préférence au moins 95% mol, voire au moins 98% mol. de dioxyde de carbone provenant de l'appareil de séparation.

3. Procédé selon la revendication 1 ou 2 dans lequel le gaz épuré dans l'unité d'adsorption (21) est comprimé dans un compresseur (25) avec un gaz (37) provenant de l'appareil de séparation plus riche en dioxyde de carbone que le gaz (31) contenant du dioxyde de carbone et au moins une impureté.

4. Procédé selon l'une des revendications précédentes dans lequel au moins une partie du gaz de régénération (39) est constituée par une partie (43) du premier courant épuré dans l'unité d'adsorption.

5. Procédé selon l'une des revendications précédentes dans lequel le premier courant (1) provient d'un procédé traitant un débit contenant du dioxyde de carbone pour l'enrichir en dioxyde de carbone, par exemple un procédé d'absorption physique, chimique ou physico-chimique ou un procédé d'adsorption.

6. Procédé selon l'une des revendications précédentes dans lequel l'unité d'adsorption (17A, 17B) est une unité d'adsorption par modulation de température et la pression de l'adsorption est supérieure à celle de la régénération.

7. Procédé selon l'une des revendications précédentes dans lequel la pression de l'adsorption et la pression de la régénération sont supérieures à 4,5 bars abs, de préférence à 5.5 bars abs voire à 6,5 bars abs.

8. Procédé selon la revendication 7 dans lequel la pression d'adsorption est au moins égale à 10 bars abs.

9. Procédé selon l'une des revendications précédentes dans lequel le gaz (31) contenant du dioxyde de carbone et au moins une impureté contient moins de dioxyde de carbone en base sèche que le gaz séché (19, 29).

10. Appareil de séparation par absorption physique, chimique ou physico-chimique intégré à un appareil de séchage capable de sécher un premier courant gazeux humide (1) contenant au moins 90% mol., de préférence au moins 95% mol, voire au moins 98% mol. CO2 en base sèche produit par l'appareil de séparation comprenant :
i) un premier appareil de séparation par absorption physique, chimique ou physico-chimique capable de produire le premier courant gazeux humide
ii) un compresseur (3) pour comprimer le premier courant gazeux humide (1) jusqu'à une première pression afin d'obtenir un premier courant gazeux humide à une première pression,
iii) au moins un refroidisseur (5, 11, 13) en aval du compresseur pour enlever une partie de l'eau (7, 15) produite par la compression et le refroidissement
iv) une unité d'adsorption d'eau (17A, 17B) du type mettant en œuvre n adsorbeurs avec, pour chaque adsorbeur, un cycle comprenant les phases opératoires suivantes, comprenant des moyens pour décaler d'un adsorbeur a l'autre d'un nième de la durée (T) du cycle :
a. Une phase d'adsorption : cette phase d'adsorption comportant l'admission du premier courant gazeux humide dans l'adsorbeur par une première extrémité, dite extrémité d'entrée, de l'adsorbeur, avec circulation de ce courant dans l'adsorbeur et soutirage simultané par l'autre extrémité de l'adsorbeur de gaz épuré en eau (19) et
b. Une phase de régénération de l'adsorbeur pendant lequel un gaz de régénération (39) régénère l'adsorbeur,
v) des moyens pour envoyer le premier courant gazeux humide à l'unité d'adsorption d'eau,
vi) des moyens pour sortir de l'unité d'adsorption un gaz riche en CO₂ séché (19) et pour l'envoyer à l'exportation et/ou à une unité de liquéfaction,
vii) des moyens pour envoyer à l'unité d'adsorption un gaz de régénération (35)
viii) un deuxième appareil de séparation (33), autre que l'unité de liquéfaction, capable de séparer un gaz (31) contenant du dioxyde de carbone et au moins une impureté par condensation partielle et/ou distillation à une température inférieure à 0°C,
ix) les moyens pour envoyer à l'unité d'adsorption le gaz de régénération étant reliés à l'appareil de séparation (33) pour y envoyer un gaz contenant au moins 90% mol de dioxyde de carbone produit par le deuxième appareil de séparation comme gaz de régénération et
x) des moyens pour envoyer le gaz de régénération (49, 51) depuis l'unité d'adsorption se mélanger avec le courant humide en amont d'au moins une des étapes de compression et d'au moins un des refroidisseurs.

11. Appareil selon la revendication 10 comprenant des moyens pour sécher le gaz (31) contenant du dioxyde de carbone et au moins une impureté en amont de l'appareil de séparation (33).

## Patentansprüche

1. Verfahren zum Trocknen eines ersten nassen Gasstroms, der mindestens 90 Mol-%, vorzugsweise mindestens 95 Mol-% oder sogar mindestens 98 Mol-% CO₂ auf Trockenbasis umfasst, das folgende Schritte umfasst:
i) Verdichten des ersten nassen Gasstroms (1) mit mindestens einem Verdichtungsschritt (3, 9) bis auf einen ersten Druck zum Erhalten eines ersten nassen Gasstroms mit dem ersten Druck, dann Abkühlen in mindestens einer Kühleinrichtung (5, 11, 13) in Strömungsrichtung hinter dem Verdichtungsschritt, wobei ein Teil des Wassers (7, 15), das durch die Verdichtung und die Abkühlung entstanden ist, in Strömungsrichtung vor einer Adsorptionseinheit entfernt wird,
ii) Trocknen des ersten Stroms in der Wasseradsorptionseinheit, bei der n Adsorber (17A, 17B) eingesetzt werden und bei der jeder Adsorber einen Zyklus aufweist, der folgende Betriebsphasen umfasst, die von einem zum nächsten Adsorber um ein n-tel der Dauer (T) des Zyklus versetzt sind:
a. Adsorption, wobei diese Adsorptionsphase das Einleiten des ersten nassen Gasstroms in den Adsorber über ein als Einströmende bezeichnetes erstes Ende des Adsorbers umfasst, wobei dieser Strom im Adsorber fließt und am anderen Ende des Adsorbers gleichzeitig von Wasser gereinigtes Gas abgezogen wird, und
b. Regeneration des Adsorbers, während der ein Regenerationsgas (35) den Adsorber regeneriert,
wobei der erste Strom in einem der Adsorber von Wasser gereinigt wird und so ein getrocknetes Gas (19, 29) erzeugt wird, wohingegen das Regenerationsgas zu einem anderen der Adsorber geleitet wird,
iii) Export und/oder Verflüssigen des getrockneten Gases an einer anderen Stelle als einer Trennvorrichtung (33),
iv) Auftrennen eines Gases (31), das weniger als 90 Mol-% CO₂ auf Trockenbasis und mindestens eine Verunreinigung enthält, bei dem es sich nicht um das getrocknete Gas handelt, durch partielle Kondensation und/oder Destillation bei einer Temperatur unter 0°C in der Trennvorrichtung (33), wodurch ein Gas (35, 37) erzeugt wird, das mindestens 90 Mol-% Kohlendioxid enthält, das mindestens einen Teil des Regenerationsgases darstellt, und
v) derartiges Leiten des Regenerationsgases (49, 51), das den Adsorber regeneriert hat, dass es mit dem nassen Strom in Strömungsrichtung vor mindestens einem der Verdichtungsschritte und mindestens einer der Kühleinrichtungen vermischt wird.

2. Verfahren nach Anspruch 1, wobei das Gas, das in der Adsorptionseinheit (21) gereinigt wird, in einem Verdichter (25) mit einem Gas (37) verdichtet wird, das mindestens 90 Mol-%, vorzugsweise mindestens 95 Mol-% oder sogar mindestens 98 Mol-% Kohlendioxid enthält, das aus der Trennvorrichtung kommt.

3. Verfahren nach Anspruch 1 oder 2, wobei das Gas, das in der Adsorptionseinheit (21) gereinigt wird, in einem Verdichter (25) mit einem Gas (37) verdichtet wird, das aus der Trennvorrichtung kommt und mehr Kohlendioxid enthält als das Gas (31), das Kohlendioxid und mindestens eine Verunreinigung enthält.

4. Verfahren nach einem der vorhergehenden Ansprüche, wobei mindestens ein Teil des Regenerationsgases (39) von einem Teil (43) des ersten Stroms gebildet wird, der in der Adsorptionseinheit gereinigt wird.

5. Verfahren nach einem der vorhergehenden Ansprüche, wobei der erste Strom (1) aus einem Verfahren stammt, mit dem ein Strom behandelt wird, der Kohlendioxid enthält, damit er mit Kohlendioxid angereichert wird, beispielsweise mit einem Verfahren zur physikalischen, chemischen oder physikalisch-chemischen Absorption oder einem Adsorptionsverfahren.

6. Verfahren nach einem der vorhergehenden Ansprüche, wobei die Adsorptionseinheit (17A, 17B) eine Einheit zur Temperaturwechseladsorption ist und der Adsorptionsdruck höher ist als der Regenerationsdruck.

7. Verfahren nach einem der vorhergehenden Ansprüche, wobei der Adsorptionsdruck und der Regenerationsdruck über 4,5 bar abs, vorzugsweise 5,5 bar abs oder sogar 6,5 bar abs betragen.

8. Verfahren nach Anspruch 7, wobei der Adsorptionsdruck mindestens 10 bar abs beträgt.

9. Verfahren nach einem der vorhergehenden Ansprüche, wobei das Gas (31), das Kohlendioxid und mindestens eine Verunreinigung enthält, weniger Kohlendioxid auf Trockenbasis enthält als das getrocknete Gas (19, 29).

10. Vorrichtung zur physikalischen, chemischen oder physikalisch-chemischen Absorption, die in eine Trockenvorrichtung integriert ist, die in der Lage ist, einen ersten nassen Gasstrom (1) zu trocknen, der mindestens 90 Mol-%, vorzugsweise mindestens 95 Mol-% oder sogar mindestens 98 Mol-% CO₂ auf Trockenbasis enthält, der von der Trennvorrichtung erzeugt wird, umfassend:
i) eine erste Vorrichtung zur physikalischen, chemischen oder physikalisch-chemischen Absorption, die in der Lage ist, den ersten nassen Gasstrom zu erzeugen,
ii) einen Verdichter (3) zum Verdichten des ersten nassen Gasstroms (1) bis auf einen ersten Druck zum Erhalten eines ersten nassen Gasstroms mit einem ersten Druck,
iii) mindestens eine Kühleinrichtung (5, 11, 13) in Strömungsrichtung hinter dem Verdichter, zum Entfernen eines Teils des Wassers (7, 15), das durch die Verdichtung und die Abkühlung entstanden ist,
iv) eine Wasseradsorptionseinheit (17A, 17B), bei der n Adsorber eingesetzt werden und bei der jeder Adsorber einen Zyklus aufweist, der folgende Betriebsphasen umfasst, die Mittel zum Versetzen von Folgendem von einem zum nächsten Adsorber um ein n-tel der Dauer (T) des Zyklus umfasst:
a. einer Adsorptionsphase, wobei diese Adsorptionsphase das Einleiten des ersten nassen Gasstroms in den Adsorber über ein als Einströmende bezeichnetes erstes Ende des Adsorbers umfasst, wobei dieser Strom im Adsorber fließt und am anderen Ende des Adsorbers gleichzeitig von Wasser gereinigtes Gas (19) abgezogen wird, und
b. einer Regenerationsphase des Adsorbers, während der ein Regenerationsgas (39) den Adsorber regeneriert,
v) Mittel zum Leiten des ersten nassen Gasstroms zur Wasseradsorptionseinheit,
vi) Mittel zum Ausleiten eines getrockneten Gases mit viel CO₂ (19) aus der Adsorptionseinheit und zum Leiten desselben zum Export und/oder zu einer Verflüssigungseinheit,
vii) Mittel zum Leiten eines Regenerationsgases (35) zur Adsorptionseinheit,
viii) eine zweite Trennvorrichtung (33), bei der es sich nicht um die Verflüssigungseinheit handelt und die in der Lage ist, ein Gas (31), das Kohlendioxid und mindestens eine Verunreinigung enthält, durch partielle Kondensation und/oder Destillation bei einer Temperatur von unter 0°C aufzutrennen,
ix) wobei die Mittel zum Leiten des Regenerationsgases zur Adsorptionseinheit mit der Trennvorrichtung (33) verbunden sind, um ein Gas, das mindestens 90 Mol-% Kohlendioxid enthält und von der zweiten Trennvorrichtung erzeugt wird, als Regenerationsgas dorthin zu leiten und
x) Mittel zum derartigen Leiten des Regenerationsgases (49, 51) aus der Adsorptionseinheit, damit es sich mit dem nassen Strom in Strömungsrichtung vor mindestens einem der Verdichtungsschritte und mindestens einer der Kühleinrichtungen vermischt.

11. Vorrichtung nach Anspruch 10, die Mittel zum Trocknen des Gases (31), das Kohlendioxid und mindestens eine Verunreinigung enthält, in Strömungsrichtung vor der Trennvorrichtung (33) umfasst.

## Claims

1. Method for drying a first wet gas stream containing at least 90 mol%, preferably at least 95 mol%, or even at least 98 mol% CO₂ on a dry basis, comprising the following steps:
i) compressing the first wet gas stream (1) to a first pressure in at least one compression step (3, 9), in order to obtain a first wet gas stream at the first pressure, and then cooling it in at least one cooler (5, 11, 13) downstream of the compression step, part of the water (7, 15) produced by compression and the cooling being removed upstream of an adsorption unit
ii) drying the first stream in the water adsorption unit of the type implementing n adsorbers (17A, 17B) with, for each adsorber, a cycle comprising the following operating phases, which are offset from one adsorber to another by an nth of the duration (T) of the cycle:
a. adsorption, this adsorption phase involving the admission of the first wet gas stream into the adsorber via a first end, called inlet end, of the adsorber, with circulation of this stream in the adsorber and simultaneous withdrawal, via the other end of the adsorber, of gas purified of water, and
b. regeneration of the adsorber during which a regeneration gas (35) regenerates the adsorber,
the first stream being purified of water in one of the adsorbers to produce a dried gas (19, 29) while the regeneration gas is sent to another of the adsorbers,
iii) exporting and/or liquefaction elsewhere than in a dried gas separation apparatus (33)
iv) separating a gas (31) containing less than 90 mol% CO2 on a dry basis and at least one impurity, other than the dried gas, by partial condensation and/or distillation at a temperature of less than 0°C in the separation apparatus (33) producing a gas (35, 37) containing at least 90 mol% of carbon dioxide which constitutes at least part of the regeneration gas and
v) sending the regeneration gas (49, 51) that has regenerated the adsorber to be mixed with the wet stream upstream of at least one of the compression steps and of at least one of the coolers.

2. Method according to Claim 1, wherein the gas purified in the adsorption unit (21) is compressed in a compressor (25) with a gas (37) containing at least 90 mol%, preferably at least 95 mol%, or even at least 98 mol% of carbon dioxide coming from the separation apparatus.

3. Method according to Claim 1 or 2, wherein the gas purified in the adsorption unit (21) is compressed in a compressor (25) with a gas (37) coming from the separation apparatus that is richer in carbon dioxide than the gas (31) containing carbon dioxide and at least one impurity.

4. Method according to one of the preceding claims, wherein at least a part of the regeneration gas (39) is constituted by a part (43) of the first stream purified in the adsorption unit.

5. Method according to one of the preceding claims, wherein the first stream (1) originates from a method treating a flow containing carbon dioxide so as to enrich it in carbon dioxide, for example a physical, chemical or physicochemical absorption method or an adsorption method.

6. Method according to one of the preceding claims, wherein the adsorption unit (17A, 17B) is a temperature swing adsorption unit and the pressure of the adsorption is greater than that of the regeneration.

7. Method according to one of the preceding claims, wherein the pressure of the adsorption and the pressure of the regeneration are greater than 4.5 bar abs, preferably than 5.5 bar abs or even than 6.5 bar abs.

8. Method according to Claim 7, wherein the adsorption pressure is at least equal to 10 bar abs.

9. Method according to one of the preceding claims, wherein the gas (31) containing carbon dioxide and at least one impurity contains less carbon dioxide on a dry basis than the dry gas (19, 29).

10. Separation apparatus using physical, chemical or physicochemical absorption, integrated with a drying apparatus capable of drying a first wet gas stream (1) containing at least 90 mol%, preferably at least 95 mol% or even at least 98 mol% CO2 on a dry basis produced by the separation apparatus comprising:
i) a first separation apparatus using physical, chemical or physicochemical absorption, capable of producing the first wet gas stream
ii) a compressor (3) for compressing the first wet gas stream (1) to a first pressure in order to obtain a first wet gas stream at a first pressure,
iii) at least one cooler (5, 11, 13) downstream of the compressor to remove part of the water (7, 15) produced by the compression and the cooling
iv) a water adsorption unit (17A, 17B) of the type implementing n adsorbers with, for each adsorber, a cycle comprising the following operating phases, comprising means for offsetting from one adsorber to another by an nth of the duration (T) of the cycle:
a. an adsorption phase: this adsorption phase involving the admission of the first wet gas stream into the adsorber via a first end, called inlet end, of the adsorber, with circulation of this stream in the adsorber and simultaneous withdrawal, via the other end of the adsorber, of gas purified of water (19) and
b. an adsorber regeneration phase during which a regeneration gas (39) regenerates the adsorber,
v) means for sending the first wet gas stream to the water adsorption unit,
vi) means for extracting a dried gas rich in CO₂ (19) from the adsorption unit and for sending it for export and/or to a liquefaction unit,
vii) means for sending a regeneration gas (35) to the adsorption unit,
viii) a second separation apparatus (33), other than the liquefaction unit, capable of separating a gas (31) containing carbon dioxide and at least one impurity by partial condensation and/or distillation at a temperature of less than 0°C,
ix) the means for sending the regeneration gas to the adsorption unit being connected to the separation apparatus (33) so as to send it a gas containing at least 90 mol% carbon dioxide produced by the second separation apparatus as regeneration gas and
x) means for sending the regeneration gas (49, 51) from the adsorption unit to be mixed with the wet stream upstream of at least one of the compression steps and of at least one of the coolers.

11. Apparatus according to Claim 10, comprising means for drying the gas (31) containing carbon dioxide and at least one impurity upstream of the separation apparatus (33).
